Europäisches Patentamt

European Patent Office

Office européen des brevets

(11) Publication number: **0 085 230**
**B1**

(12) **EUROPEAN PATENT SPECIFICATION**

(45) Date of publication of patent specification: **29.01.86**

(51) Int. Cl.⁴: **B 60 T 13/14**

(21) Application number: **82306131.2**

(22) Date of filing: **17.11.82**

(54) Vehicle brake booster.

(30) Priority: **19.01.82 GB 8201468**

(43) Date of publication of application:
**10.08.83 Bulletin 83/32**

(45) Publication of the grant of the patent:
**29.01.86 Bulletin 86/05**

(84) Designated Contracting States:
**DE FR IT**

(56) References cited:
**DE-B-2 033 681**
**GB-A-2 043 193**
**GB-A-2 069 079**
**US-A-2 980 066**

(73) Proprietor: **AUTOMOTIVE PRODUCTS PUBLIC LIMITED COMPANY**
**Tachbrook Road**
**Leamington Spa Warwickshire CV31 3ER (GB)**

(72) Inventor: **Young, Alastair John**
**39 Roundshill**
**Kenilworth Warwickshire (GB)**
Inventor: **Parsons, David**
**125 Clinton Lane**
**Kenilworth Warwickshire (GB)**
Inventor: **Brent, David Alex**
**54 Coppice Road Whitnash**
**Leamington Spa Warwickshire (GB)**

(74) Representative: **Farrow, Robert Michael**
**Patent Department Automotive Products plc**
**Tachbrook Road**
**Leamington Spa Warwickshire CV31 3ER (GB)**

Courier Press, Leamington Spa, England.

## Description

This invention relates to vehicle brake boosters.

Brake boosters augment a drivers braking effort so as to reduce the brake pedal load needed to achieve a given braking effect.

Hitherto the power source for the booster has often been provided by inlet manifold depression of the vehicle engine but it is becoming more common to utilise hydraulic fluid under pressure from, for example, a power steering pump.

Such fluid pressure boosters include a boost piston and a boost valve responsive to a drivers braking effort to admit fluid under pressure to the boost piston to reduce the applied braking effort as a proportion of the braking effect achieved. Feedback means are arranged in the boost valve to apply to the brake pedal a reaction load which is the desired proportion of the braking effect achieved. Usually the boost piston acts on a hydraulic master cylinder in series with the drivers brake pedal.

It is known from US—A—2 980 066 to provide a mechanical linkage to transmit force from a brake pedal to a valve mechanism controlling a boost piston and to a master cylinder piston such that, upon failure of fluid pressure the master cylinder piston may be operated by direct pedal actuation without transmitting forces to the boost piston, thereby relieving the operator of the necessity to exert additional force under such conditions to overcome the friction of the boost piston and the loading of the boost piston return spring.

The present invention provides an improved fluid pressure brake booster having a more compact arrangement and which, if the fluid pressure supply to the brake booster fails, operates substantially as a conventional master cylinder without the need for additional mechanical linkages.

According to the present invention there is provided a vehicle brake booster comprising a brake master cylinder having a piston operable by a brake pedal, and a boost piston slidable in a boost chamber to apply a boost force to the piston and a power valve including a valve member operable by the brake pedal to admit fluid under pressure from a source to the boost chamber and reaction means to apply to the brake pedal a proportion of the boost force developed by the boost piston, the arrangement being such that upon failure of the source the master cylinder piston is operable directly by the brake pedal without the brake pedal transmitting forces to the boost piston and its return spring characterised in that the power valve includes a telescopic strut forming part of the operable connection between the valve member and the brake pedal, the telescopic strut being held extended by fluid under pressure from said source to connect the valve member to the brake pedal and being collapsable to disconnect the valve member from the brake pedal when pressure from said source is absent.

Thus operable connection between the brake pedal and the valve means of the power valve is through the fluid in the extended telescopic strut.

In a preferred embodiment of the invention a twin vehicle brake booster comprises two brake master cylinders, each for connection to a respective part of a braking system, and operable by a brake pedal, and a power valve including valve means is operable by the brake pedal to admit fluid under pressure from a source to two boost pistons, one for each master cylinder, and for applying a boost force to the respective master cylinder.

An equalising linkage is provided between the pushrods of the master cylinders so as to ensure the same braking pressure is generated by each cylinder.

Other features of the invention are included in the following description of two preferred embodiments shown, by the way of example only, in the accompanying drawings in which:—

Fig. 1 is a diagrammatic side elevation of a brake booster assembly according to the invention showing the general arrangement of the master cylinder and power valve;

Fig. 2 is a plan view of the assembly of Fig. 1;

Fig. 3 is an axial section through a brake booster assembly being a first embodiment of the invention;

Fig. 4 is an axial section through a brake booster assembly being a second embodiment of the invention;

Fig. 5 is a diagrammatic side elevation of a dual brake booster assembly according to the invention showing the general arrangement of the twin master cylinders and power valve; and

Fig. 6 is an end view of the assembly of Fig. 5.

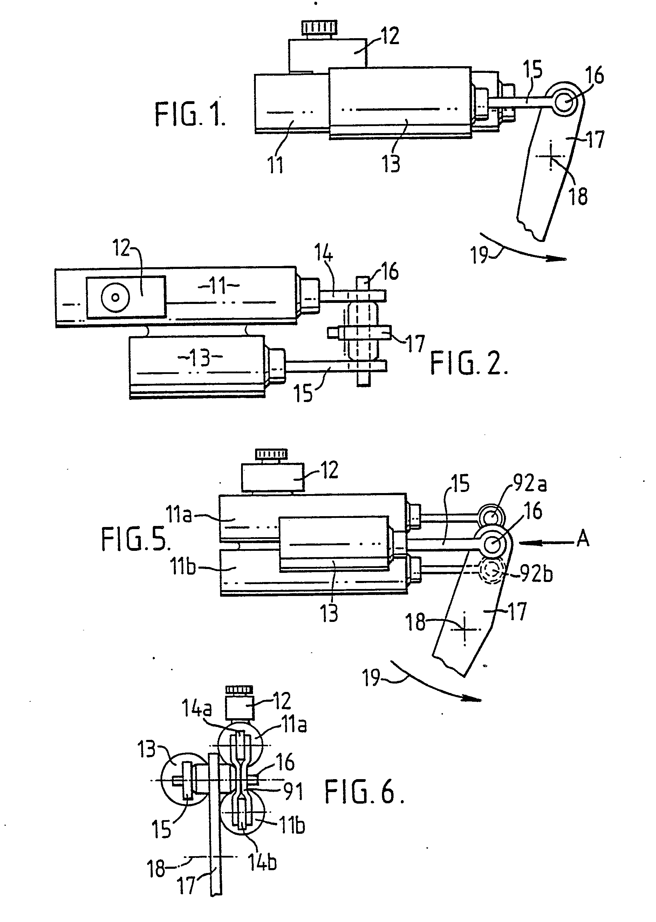

With reference to Figs. 2 and 2 of the invention there is shown a hydraulic master cylinder 11, having the usual fluid reservoir 12, and a power valve 13 mounted alongside. The respective pushrods 14 and 15 of the cylinder 11 and valve 13 are connected for movement together by a pin 16. A brake pedal 17, pivoted about an axis 18 is journalled on the pin 16 such that angular movement of the pedal in the direction of arrow 19 will cause equal movement of the respective pushrod into the cylinder 11 and valve 13.

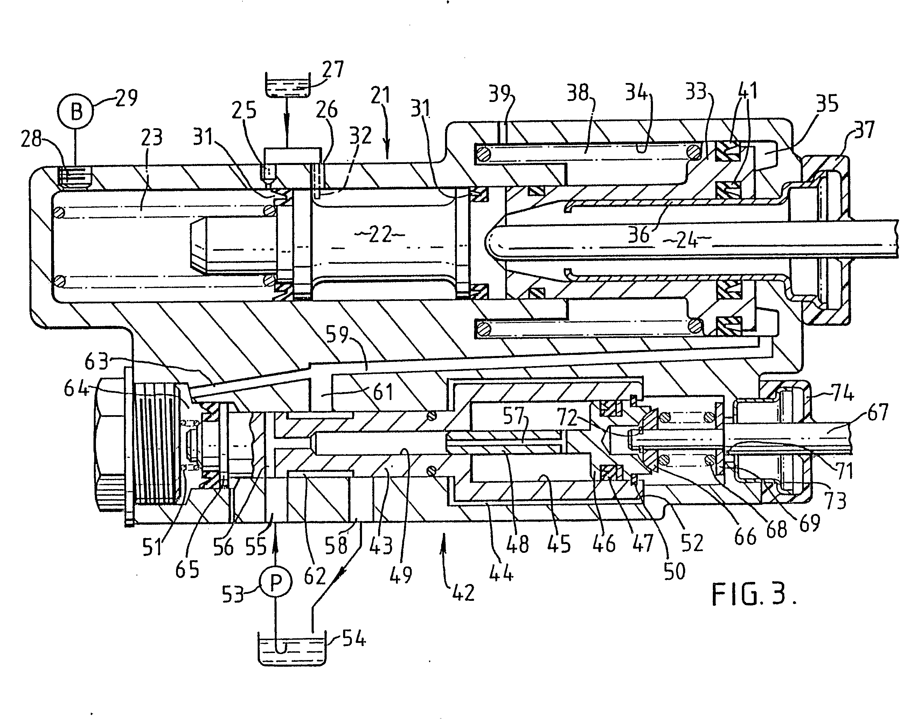

The operation of the brake booster assembly will be described with reference to Fig. 3 which corresponds generally to the configuration of Figs. 1 and 2.

A master cylinder 21 includes a piston 22 operable against a return sprin 23 by a pushrod 24 (corresponding to pushrod 14). A supply port 25 and bypass port 26 are provided from a fluid reservoir 27 and an outlet port 28 is for connection to the braking system 29. The usual seals 31 and stop pin 32 for limiting return movement of the piston 27 are provided.

As described so far the master cylinder 21 is of conventional construction.

An annular boost piston 33 is slidable in an enlarged end bore 34 of the master cylinder against the piston 22. An inner wall for a boost chamber 35 is provided by the annular sleeve 36 which locates at its outer end a dust boot 37 for the pushrod 24. A return spring 38 urges the piston 33 to its rest position and a vent hole 39 is provided for the return spring chamber. The piston 33 has the usual fluid seals 41.

The power valve 42 includes a valve member 43 slidable in a stepped bore 44. One end of the member 43 is enlarged to form an annular cylinder 45 in which a piston 46 is slidable. The piston has a fluid seal 47 and is located by a co-axial extension 48 which is a close fit in a bore 49 of the valve member. A return spring 51 biasses the member 43 against a shoulder 52 of the bore 44. The cylinder 45 and piston 46 comprise a telescopic cylinder, outward movement of the piston 46 is limited by a circlip 50.

A hydraulic pump 53 delivers fluid under pressure from a reservoir 54 to an inlet port 55 of the valve 42. A cross drilling 56 of the member 43 connects the inlet port 55 to the hydraulic cylinder through bore 49 and a fluid passage 57 formed in piston extension 48 as shown.

The boost chamber 35 is connected to a drain port 58 of the valve 42 via a fluid passage 59, supply port 61 and annular transfer port 62 of the valve member 43.

Movement of the member 43 against its return spring 51 closes communication between the supply and drain ports 61 and 58 and connects the inlet supply ports 55 and 61 as will be further described.

A fluid passage 63 opens from supply port 61 into the spring chamber 64 of spring 51 to act on enlarged head 65 of the valve member 43. The chamber 64 constitutes the reaction chamber for the valve 42.

The piston 46 has a part-spherical end face in which a collar 66 having a corresponding part-spherical face is located. The collar 66 has a through bore in which a stepped pushrod 67, corresponding to pushrod 15 of Figs. 1 and 2 is slidable. A compression spring 68 acts between the collar 66 and a washer 69 located against a step 71 of the pushrod 67. Circlip 72 limits extension of the pushrod through the collar.

An annular pressing 73 located in the mouth of the power valve 42 retains a dust boot 74 for the pushrod 67.

Operation of the brake booster assembly is as follows:—

The master cylinder 21 and power valve 42 are shown in the rest position. When the pump 53 is delivering fluid under pressure (normally when the vehicle engine is running) this fluid passes through inlet port 55 and passages 56, 49, 57 to extend the telescopic strut 45, 46 and maintain it at maximum pump pressure. Operable connection between the pushrod 67 and valve member 43 is thus effected.

When the brake pedal is depressed pushrod 67 acts through coil spring 68 and the telescopic strut to shift the valve member 43 against the return spring 51. As a consequence connection between supply port 61 and drain port 58 is closed.

Parallel movement of the pushrod 24 into the master cylinder 21 is not sufficient to generate more than minimal brake pressure.

Further movement of the pushrod 67 shifts the valve member 43 further to connect the inlet port 55 and supply port 61. Fluid pressure passes to the boost chamber 35 and to the reaction chamber 64.

Fluid pressure in the boost chamber 35 urges the piston 33 against the master cylinder piston 22 to apply the wheel brakes. The piston 22 moves away from the pushrod 24. Fluid pressure in the reaction chamber 64 opposes driver effort through the pushrod 67. When fluid pressure overcomes driver effort the compression spring 68 partially collapses to allow valve member 43 to re-cover the inlet port 55 and prevent further increase of pressure in the boost chamber.

If the driver should require increased braking effort, additional load on the pushrod 67 will re-connect the inlet and supply ports until fluid pressure in the reaction chamber 64 again overcomes driver effort.

The diameter of the piston 46 is slightly larger than that of the head 65 of the valve member 43. This ensures that the telescopic strut remains fully extended at all times when the pump 53 is running.

Removal of brake pedal load will cause the valve member 43 to move back to the rest position as shown under the action of return spring 51 to re-connect the supply and drain ports. The boost chamber 35 will exhaust and the master cylinder piston 22 return under the action of its spring 23.

The metering action of the valve member 43 in response to drive load and fluid pressure in the reaction chamber 64 is conventional and well understood in brake art. The area of the head 65 and hence piston 46 are carefully chosen to give the power valve the desired characteristic.

Should the pump 53 fail brake pedal load will not be resisted by the telescopic cylinder and braking pressure will be generated by direct action of the pushrod 24 on the piston 22. The telescopic strut will collapse with the piston 46 being pushed into the cylinder 45.

On release of the brake pedal, pushrod 67 and collar 66 will move away from the piston 46 leaving it towards the bottom of the cylinder 45.

Subsequent applications of the brake pedal will stroke the pushrod 67 only. Thus should the fluid pressure supply fail, no substantial loads will be generated in the power valve to resist driver's pedal effort. The frictional resistance generated by the dust boot 74 is negligible.

The master cylinder 21 will operate substantially as if the power valve 42 and boost piston 33 had never been provided.

As soon as the fluid pressure source is restored the telescopic strut will re-extend to provide operable connection between the pushrod 67 and the valve member 43.

The spring 68 may act as a travel device so as to progressively collapse with increasing pedal load.

This is to simulate unboosted master cylinder travel to give the brake pedal a similar travel in boosted and unboosted modes, if desired.

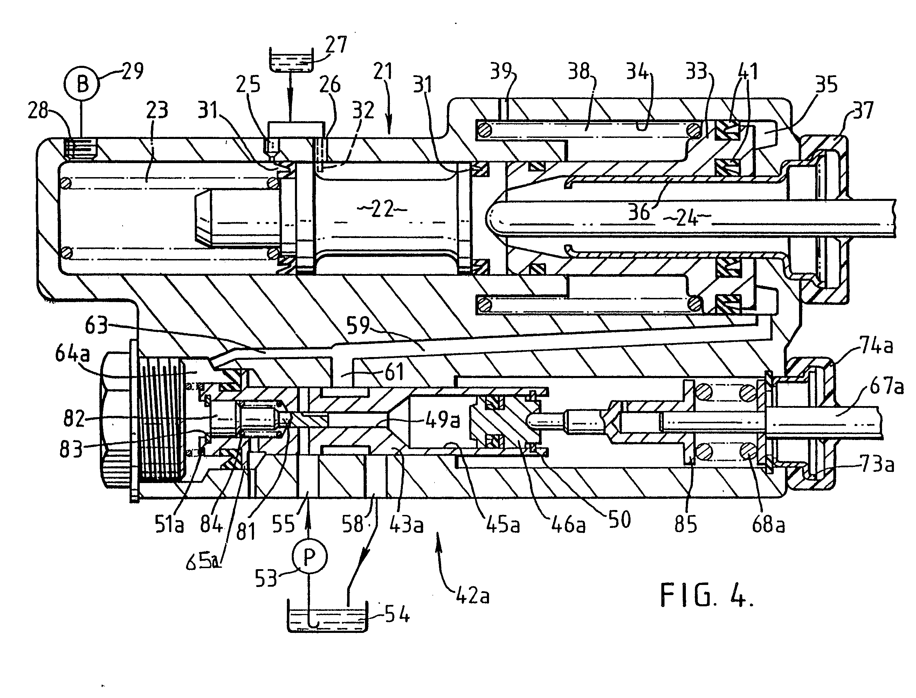

With reference to Fig. 4 there is shown an alternative boosted master cylinder. The master cylinder and boost piston are the same as those described for Fig. 3 and carry the same reference numerals. Components of the power valve having the same function as those of Fig. 3 carry the same numerals with a suffix 'a'.

The main difference with the previous embodiment is that the telescopic strut formed by cylinder 45a and piston 46a is of much smaller diameter.

A closure valve 81 is provided for the passage 49a connecting the inlet port 55 to the cylinder 45a. The valve 81 has a head 82 exposed to fluid pressure in the reaction chamber 64a and is urged to the open position against a circlip 83 by a light return spring 84. In other respects the power valve is functionally the same as that of Fig. 3, a tubular extension 85 being provided to accommodate the pushrod 67a as the travel spring 68a collapses.

In operation the telescopic strut is pressurised to operably connect the pushrod 67a with the valve member 43a as in the previous embodiment.

On depression of the brake pedal the valve member 43a is moved against its return spring 51a to isolate the drain port and connect the inlet and supply ports 55 and 61. As fluid pressure increases in reaction chamber 64a, the valve 81 moves against the light spring 84 to close the passage 49a and isolate the telesopic strut.

Further increase in brake pedal load increases the fluid pressure in the hydraulic strut above pump pressure so that although the reaction area provided by the head of the valve member is of greater area than the piston 46a, the strut remains fully extended since the hydraulic fluid is trapped therein by the closure valve 81.

Thus the telescopic strut can be of smaller diameter than the reaction chamber provided that the hydraulic fluid is locked in by a closure valve 81.

On release of the brake pedal the return spring urges the valve 81 against circlip 83 as soon as fluid pressure in the reaction chamber 64a has drained through port 58.

Should the fluid pressure source fail the piston 46a will be pushed without resistance into the cylinder 45a and remain there until the source is restored. Thus the master cylinder load will be generated by the pushrod 24 and brake pedal loads will be substantially as if the power valve 42a and boost piston 33 had never been provided.

The master cylinder 21 of Figs. 3 and 4 could be replaced by a conventional tandem master cylinder for a dual circuit braking system or could be augmented by an additional master cylinder having its own boost piston connected to the power valve as shown in Figs. 5 and 6.

Two master cylinders 11a and 11b have a common fluid reservoir 12. A power valve 13 is mounted alongside.

A brake pedal 17 is pivoted about the axis 18 and has a pivot pin 16 passing freely through a boss on the pedal free end.

A pushrod 15 for the power valve is journalled on one free end of the pin and a beam 91 journalled on the other free end. The pushrods 14a, 14b one for each master cylinder 11a, 11b are provided and are coupled by a respective pivot pin 92a, 92b one to each end of the beam 91.

The beam serves to equalise brake pedal loads on the master cylinders 11a and 11b and so ensure equal output pressures from the cylinders.

Operation of the twin master cylinder is as described for the embodiments of Figs. 3 and 4.

## Claims

1. A vehicle brake booster comprising a brake master cylinder (11, 11a, 11b, 21) having a piston (22) operable by a brake pedal (17) and a boost piston (33) slidable in a boost chamber (35) to apply a boost force to the piston (22) and a power valve (13, 42, 42a) including a valve member (43, 43a) operable by the brake pedal (17) to admit fluid under pressure from a source (53) to the boost chamber (35) and reaction means (65) to apply to the brake pedal (17) a proportion of the boost force developed by the boost piston (33) the arrangement being such that upon failure of the source (53) the master cylinder piston (22) is operable directly by the brake pedal (17) without the pedal (17) transmitting forces to the boost piston (33) and its returning spring (38) characterised in that the power valve (13, 42, 42a) includes a telescopic strut (45, 46, 45a, 46a) forming part of the operable connection between the valve member (43, 43a) and the brake pedal (17), the telescopic strut (45, 46, 45a, 46a) being held extended by fluid under pressure from said source (53) to connect the valve member (43, 43a) to the brake pedal (17) and being collapsable to disconnect the valve member (43, 43a) from the brake pedal (17) when pressure from said source (53) is absent.

2. A brake booster as claimed in Claim 1 characterised in that the power valve (13, 42, 42a) is mounted alongside the brake master cylinder (11, 21).

3. A brake booster as claimed in Claim 1 characterised in that there are two master cylinders (11a, 11b) each having its own boost piston (33) connected to the power valve (13).

4. A brake booster as claimed in Claim 3 characterised in that the power valve (13) is mounted alongside the two master cylinders (11a, 11b).

5. A brake booster as claimed in Claim 3 or in Claim 4 characterised in that the two master cylinders (11a, 11b) are operably connected to the brake pedal (17) by a beam (91) journalled on the brake pedal (17).

6. A brake booster as claimed in Claim 5 characterised in that each of the two master cylinders (11a, 11b) has a respective pushrod (14a, 14b) connected one at each end of the beam (91) to provide equal output pressures from the two cylinders (11a, 11b).

7. A brake booster as claimed in any preceding Claim characterised in that the reaction means comprises a reaction chamber (64, 64a) connected by fluid passages (63, 59) to the boost chamber (35) and a head (65, 65a) of the valve member (43, 43a) against which fluid at pressure in the reaction chamber (64, 64a) reacts.

8. A brake booster as claimed in Claim 7 characterised in that the power valve (42a) includes a closure valve (81) to trap fluid under pressure in the telescopic strut (45a, 46a) in response to actuation of the valve member (43a) by the brake pedal (17).

9. A brake booster as claimed in Claim 8 characterised in that the closure valve (81) has a head (82) exposed to fluid pressure in the reaction chamber (64a) and is urged to the open position by a spring (84) the arrangement being such that as pressure increases in the reaction chamber (64a) the valve (81) moves against the spring (84) to close a passage (49) and isolate the telescopic strut (45a, 46a) from the source (53).

10. A brake booster as claimed in Claim 9 characterised in that the effective area of the telescopic strut (45a, 46a) is less than the effective area of head (65a) of the valve member (43a).

**Patentansprüche**

1. Fahrzeugbremskraftverstärker mit einem Bremssteuerzylinder (11, 11a, 11b, 21), der einen durch ein Bremspedal (17) betätigbaren Kolben (22) und einen in einer Verstärkungskammer (35) verschiebbaren Verstärkungskolben (33) zum Anlegen einer Verstärkungskraft an den Kolben (22) hat, und einem Kraftventil (13, 42, 42a) mit einem Ventilglied (43, 43a), das durch das Bremspedal (17) betätigbar ist, um Druckfluid von einer Quelle (53) in die Verstärkungskammer (35) zu lassen, und mit einer Reaktionseinrichtung (65), um an das Bremspedal (17) einen Teil der durch den Verstärkungskolben (33) entwickelten Verstärkungskraft anzulegen, wobei die Anordnung derart ist, daß bei einem Versagen der Quelle (53) der Steuerzylinderkolben (22) direkt durch das Bremspedal (17) betätigbar ist, ohne daß das Pedal (17) Kräfte auf den Verstärkungskolben (33) und seine Rückholfeder (38) überträgt, dadurch gekennzeichnet, daß das Kraftventil (13, 42, 42a) eine Teleskopstrebe (45, 46, 45a, 46a) aufweist, die einen Teil der Wirkverbindung zwischen dem Ventilglied (43, 43a) und dem Bremspedal (17) bildet, wobei die Teleskopstrebe (45, 46, 45a, 46a) durch Druckfluid von der Quelle (53) ausgestreckt gehalten wird, um das Ventilglied (43, 43a) mit dem Bremspedal (17) zu verbinden, und zusammenschiebbar ist, um das Ventilglied (43, 43a) von dem Bremspedal (17) zu trennen, wenn der Druck von der Quelle (53) fehlt.

2. Bremskraftverstärker nach Anspruch 1, dadurch gekennzeichnet, daß das Kraftventil (13, 42, 42a) längs des Bremssteuerzylinders (11, 21) angebracht ist.

3. Bremskraftverstärker nach Anspruch 1, dadurch gekennzeichnet, daß zwei Steuerzylinder (11a, 11b) vorhanden sind, von denen jeder seinen eigenen Verstärkungskolben (33) hat, der mit dem Kraftventil (13) verbunden ist.

4. Bremskraftverstärker nach Anspruch 3, dadurch gekennzeichnet, daß das Kraftventil (13) längs der beiden Steuerzylinder (11a, 11b) angebracht ist.

5. Bremskraftverstärker nach Anspruch 3 oder Anspruch 4, dadurch gekennzeichnet, daß die beiden Steuerzylinder (11a, 11b) durch einen Balken (91), der an dem Bremspedal (17) drehbar gelagert ist, mit dem Bremspedal (17) wirkmäßig verbunden sind.

6. Bremskraftverstärker nach Anspruch 5, dadurch gekennzeichnet, daß jeder der beiden Steuerzylinder (11a, 11b) eine zugehörige Stößelstange (14a, 14b) hat, wobei mit jedem Ende des Balkens (91) eine verbunden ist, um gleiche Ausgangsdrücke der beiden Zylinder (11a, 11b) zu liefern.

7. Bremskraftverstärker nach irgendeinem vorhergehenden Anspruch, dadurch gekennzeichnet, daß die Reaktionseinrichtung eine Reaktionskammer (64, 64a), die durch Fluidkanäle (63, 59) mit der Verstärkungskammer (35) verbunden ist, und einen Kopf (65, 65a) des Ventilgliedes (43, 43a) aufweist, auf den Druckfluid in der Reaktionskammer (64, 64a) eine Reaktionskraft ausübt.

8. Bremskraftverstärker nach Anspruch 7, dadurch gekennzeichnet, daß das Kraftventil (42a) ein Schließventil (81) aufweist, um Druckfluid in der Teleskopstrebe (45a, 46a) infolge der Betätigung des Ventilgliedes (43a) durch das Bremspedal (17) einzuschließen.

9. Bremmskraftverstärker nach Anspruch 8, dadurch gekennzeichnet, daß das Schließventil (81) einen Kopf (82) hat, der dem Fluiddruck in der Reaktionskammer (64a) ausgesetzt ist, und durch eine Feder (84) in die Offenstellung gedrängt wird, wobei die Anordnung derart ist, daß wenn der Druck in der Reaktionskammer (64a) zunimmt, das Ventil (81) sich gegen die Feder (84) bewegt, um einen Durchgang (49) zu verschließen und die Teleskopstrebe (45a, 46a) von der Quelle (53) zu trennen.

10. Bremskraftverstärker nach Anspruch 9, dadurch gekennzeichnet, daß die wirksame Fläche der Teleskopstrebe (45a, 46a) kleiner als die wirksame Fläche des Kopfes (65a) des Ventilgliedes (43a) ist.

**Revendications**

1. Dispositif d'assistance de freinage pour véhicules comprenant un maître-cylindre de freinage (11, 11a, 11b, 21) possédant un piston (22) pouvant être actionné par une pédale de frein (17) et un piston d'assistance (33) qui coulisse dans une chambre d'assistance (35) pour appliquer une force d'assistance au piston (22), et une soupape de puissance d'assistance (13, 42, 42a) comprenant un élément de soupape (43, 43a) pouvant être actionné par la pédale de frein pour admettre le fluide sous pression provenant d'une source (53) à la chambre d'assistance (35) et des moyens de réaction (65) servant à appliquer à la pédale de frein (17) une partie de la force d'assistance développée par le piston d'assistance (33), l'agencement étant tel qu'en cas de défaillance de la source (53), le piston 22 du maître cylindre puisse être actionné directement par la pédale de frein (17) sans que la pédale (17) ne transmette de force au piston d'assistance (33), ni à son ressort de rappel (38), caractérisé en ce que la soupape de puissance d'assistance (13, 42, 42a) comprend une entretoise télescopique (45, 46, 45a, 46a) formant une partie de la liaison fonctionnelle établie entre l'élément de soupape (43, 43a) et la pédale de frein (17), l'entretoise télescopique (45, 46, 45a, 46a) étant maintenue en extension par le fluide sous pression provenant de ladite source (53) pour accoupler l'élément de soupape (43, 43a) à la pédale de frein (17) et pouvant se comprimer pour désaccoupler l'élément de soupape (43, 43a) de la pédale de frein (17) en l'absence de la pression de la source (53).

2. Dispositif d'assistance de freinage selon la revendication 1, caractérisé en ce que la soupape de puissance d'assistance (13, 42, 42a) est montée le long du maître-cylindre de frein (11, 21).

3. Dispositif d'assistance de freinage selon la revendication 1, caractérisé en ce qu'il comprend deux maîtres-cylindres (11a, 11b) dont chacun possède son propre piston d'assistance (33) relié à la soupape de puissance d'assistance (13).

4. Dispositif d'assistance de freinage selon la revendication 3, caractérisé en ce que la soupape de puissance d'assistance (13) est montée le long des deux maîtres-cylindres (11a, 11b).

5. Dispositif d'assistance de freinage selon les revendications 3 et 4, caractérisé en ce que les deux maîtres-cylindres (11a, 11b) sont reliés fonctionnellement à la pédale de frein (17) par un palonnier (91) articulé sur la pédale de frein (17).

6. Dispositif d'assistance de freinage selon la revendication 5, caractérisé en ce que les deux maîtres-cylindres (11a, 11b) possèdent des poussoirs respectifs (14a, 14b) articulés aux deux extrémités du palonnier (91) de manière à émettre des pressions de sortie identiques par les deux cylindres (11a, 11b).

7. Dispositif d'assistance de freinage selon une quelconque des revendications précédentes, caractérisé en ce que les moyens de réaction comprennent une chambre de réaction (64, 64a) reliée par des passages de fluide (63, 59) à la chambre d'assistance (35) et une tête (65, 65a) de l'élément (43, 43a) de la soupape contre lequel réagit le fluide à la pression régnant dans la chambre de réaction (64, 64a).

8. Dispositif d'assistance de freinage selon la revendication 7, caractérisé en ce que la soupape d'assistance (42a) comprend une soupape obturatrice (81) servant à emprisonner du fluide sous pression dans l'entretoise télescopique (45a, 46a) en réponse à l'actionnement de l'élément de soupape (43a) par la pédale de frein (17).

9. Dispositif d'assistance de freinage selon la revendication 8, caractérisé en ce que la soupape obturatrice (81) présente une tête (82) soumise à la pression du fluide contenu dans la chambre de réaction (64a) et est sollicitée vers sa position ouverte par un ressort (84), l'agencement étant tel que, lorsque la pression s'élève dans la chambre de réaction (64a), la soupape (81) se déplace à l'encontre du ressort (84) pour former un passage (49) et isoler l'entretoise télescopique (45a, 46a) de la source (53).

10. Dispositif d'assistance de freinage selon la revendication 9, caractérisé en ce que la surface effective de l'entretoise télescopique (45a, 46a) est inférieure à la surface effective de la tête (65a) de l'élément de soupape (43a).

FIG.1.

FIG.2.

FIG.5.

FIG.6.

FIG. 3.

0 085 230

2

FIG. 4.